# EUROPEAN PATENT APPLICATION

(11) **EP 4 657 722 A1**
(43) Date of publication of application: **03.12.2025**
(21) Application number: 25174694.7
(22) Date of filing: 07.05.2025
(51) Int. Cl.: H02K 7/08, H02K 16/02, H02K 21/22, H02K 21/24

(54) **ROTARY ELECTRIC MACHINE**

(30) Priority: 15.05.2024 JP 2024079693
(71) Applicant: MAZDA MOTOR CORPORATION, Hiroshima 730-8670 (JP)
(72) Inventor: Yonemori, Kei, Aki-gun, Hiroshima 730-8670 (JP)
(74) Representative: Lorenz Seidler Gossel Part. mbB

(57) **Abstract**

[Problem] To achieve high efficiency of a rotary electric machine in the rotary electric machine in which plural rotors are arranged to sandwich a stator.

[Solution] A rotary electric machine 1 includes a rotor shaft 3, a stator 20 having a stator core 21, and paired rotors 10, 11, each of which is connected to the rotor shaft 3 while keeping a predetermined gap G from the stator core 21. The paired rotors 10, 11 are provided to oppose each other in a manner to sandwich the stator core 21 from both sides in an axial direction. In an opening 24 that is provided in the stator core 21 and penetrates the stator core 21 in the axial direction, paired rollers 30, 31, which are aligned in the axial direction, are each provided to be rotatable about a radial direction. The paired rollers 30, 31 are in contact with each other in the opening 24, and portions thereof that protrude outward in the axial direction from the opening 24 are in contact with the paired rotors 10, 11, respectively.

## Description

### [Technical Field]

The present invention relates to a rotary electric machine and, in particular, to a rotary electric machine in which plural rotors are arranged to sandwich a stator.

### [Background Art]

Conventionally, a radial gap type rotary electric machine and an axial gap type rotary electric machine have been known. In the radial gap type rotary electric machine, a rotor and a stator are arranged with a gap in a radial direction therebetween. In the axial gap type rotary electric machine, a rotor and a stator are arranged with a gap in an axial direction therebetween. In some of these gap rotary electric machines, the plural rotors are arranged to sandwich the stator.

A gap (an air gap) between the rotor and the stator is filled with air having low relative magnetic permeability, and magnetic resistance is high. Thus, it is considered that the gap between the rotor and the stator in the gap rotary electric machine is preferably as narrow as possible. However, when the gap between the rotor and the stator is extremely narrowed, the rotor that is tilted by vibration or the like during driving of the rotary electric machine possibly comes into contact with the stator, resulting in abrasion, breakage, rotation lock, or increased drag loss.

To handle such a problem, for example, Patent Literature 1 discloses a configuration of an axial gap motor in which a stator is arranged between two rotors, each of which is fixed to a rotational shaft and which are aligned in the axial direction. In the axial gap motor, a thrust bearing is interposed between one of the rotors and the stator and between the other rotor and the stator, and thereby supports the stator in a relatively rotatable manner to each of the rotors.

According to this configuration in Patent Literature 1, the gap between the rotor and the stator can be kept constant by the thrust bearing, which is interposed between the stator and the rotor. In this way, the contact between the rotor and the stator can be suppressed.

### [Citation List]

### [Patent Literature]

[Patent Literature 1] JP2022-34447A

### [Summary of Invention]

### [Technical Problem]

Meanwhile, since "efficiency" in the rotary electric machine is "output/(output + loss)", it is required to suppress loss and increase output in order to achieve high efficiency of the rotary electric machine. Here, the "output" of the rotary electric machine is "torque × rotational speed". Thus, in order to increase the output, it is required to increase torque (torque density) that can be generated by a stator coil current in the same magnitude and to cause smooth rotation of the rotor without waste.

In this regard, in Patent Literature 1 described above, when a diameter of each rotating body in the bearing, which is interposed between the rotor and the stator, is reduced to narrow the air gap, a rotational speed of each of the rotating bodies that co-rotate with the rotor rotating at a high speed is increased excessively, which possibly results in seizure. As described above, in Patent Literature 1, there is a certain limitation on a reduction of the air gap by reducing a size of the bearing. Thus, there is a problem of a difficulty in increasing the torque density and thus a difficulty in improving efficiency of the rotary electric machine.

In addition, according to Patent Literature 1, the gap between the rotor and the stator can be made constant by the thrust bearing. However, such a situation is assumed that, when the rotary electric machine is driven, for example, one of the rotors is tilted to the stator side while the other rotor is tilted away from the stator. In such a situation, the other rotor keeps rotating. However, due to presence of an internal gap in the bearing between the other rotor and the stator, the rotation of each of the rotating bodies in the bearing is possibly stopped.

In such a situation, when the tilt of the other rotor is corrected, the other rotor, which keeps rotating at the high speed, comes into contact with the rotating body, the rotation of which is stopped (via a housing washer or the like). As a result, the smooth rotation of the rotary electric machine is possibly hindered (the rotational speed is possibly reduced), and the drag loss is possibly increased, which further possibly leads to the reduced efficiency of the rotary electric machine.

Such a problem possibly occurs to any rotary electric machine in which the plural rotors are arranged to sandwich the stator, and thus possibly occurs not only to the axial gap type rotary electric machine as described in Patent Literature 1 but also to the radial gap type rotary electric machine.

The invention has been made in view of such a point, and an object thereof is to provide a technique capable of improving efficiency of a rotary electric machine in which plural rotors are arranged to sandwich a stator.

### [Solution to Problem]

In order to achieve the above object, in a rotary electric machine according to the invention, paired rotating bodies, which partially protrude toward both outer sides of a stator core, are provided in an opening that is provided by penetrating the stator core, and such protruding portions are brought into contact with rotors to cause constant rotation of these paired rotating bodies in conjunction with rotation of the rotors.

More specifically, the invention is directed to a rotary electric machine that includes: a rotational shaft; a stator having an annular stator core that is coaxial with the rotational shaft; and paired rotors, each of which is connected to the rotational shaft while keeping a predetermined gap from the stator core.

In this rotary electric machine, the paired rotors are provided to oppose each other in an axial direction in a manner to sandwich the stator core from both sides in the axial direction of the rotational shaft, or to oppose each other in a radial direction in a manner to sandwich the stator core from radially inner and outer sides of the rotational shaft, the stator core is provided with an opening that penetrates the stator core in an opposing direction of the paired rotors, in the opening, paired rotating bodies are rotatably provided to be aligned in the opposing direction, the paired rotating bodies are in contact with each other in the opening, and a portion of each of the rotating bodies that protrudes outward in the opposing direction from the opening is in contact with at least one of the paired rotors.

A magnetic field from the stator is generated on both sides in the axial direction of the stator in a case of an axial gap type or on the radially inner and outer sides of the stator in a case of a radial gap type. However, according to this configuration, since the paired rotors are provided to oppose each other in the axial direction or the radial direction in the manner to sandwich the stator core, it is possible to improve output torque of the rotary electric machine with respect to a size thereof in comparison with a case where the single rotor is provided for the single stator.

In addition, the paired rollers, which are provided in each of the openings, protrude outward in the opposing direction from the respective opening. Thus, even when the predetermined gap between each of the rotors and the stator core is narrowed, the rotor, which is tilted by vibration of the rotary electric machine or the like, comes into contact with the respective rotating body, which is rotatably provided, and does not contact the stator core itself. Thus, it is possible to suppress occurrence of abrasion, breakage, and rotation lock.

Furthermore, unlike interposition of a bearing between the rotor and the stator, for example, only a part of the rotating body protrudes outward from the opening. In other words, a size of the rotating body can be absorbed by a width, a thickness, or the like of the stator. Thus, even when a diameter of the rotating body is increased, the predetermined gap between the rotor and the stator core can be narrowed as much as possible. In this way, it is possible to increase torque density by narrowing the predetermined gap between the rotor and the stator core while increasing the diameter of the rotating body to suppress occurrence of seizure.

Moreover, the paired rotating bodies are in contact with each other in the opening, and the portion, which protrudes outward in the opposing direction from the opening, in each of the rotating bodies is in contact with at least one of the paired rotors. Thus, the following operation/effects can be exerted. Hereinafter, a description will separately be made on (1) a case where it is configured that the paired rotating bodies and the paired rotors are respectively in contact with each other, and (2) a case where it is configured that one of the paired rotating bodies and respective one of the paired rotors are in contact with each other.

### In case of (1)

In this case, one of the rotors and one of the rotating bodies are in contact with each other. Thus, when the one rotor rotates about the axial direction with respect to the stator core, the one rotating body rotates about the radial direction (or the axial direction), for example, clockwise at a rotational speed (also referred to as a "corresponding rotational speed A") that corresponds to a rotational speed of the one rotor. Similarly, the other rotor and the other rotating body are in contact with each other. Thus, when the other rotor rotates about the axial direction with respect to the stator core, the other rotating body rotates about the radial direction (or the axial direction), for example, counterclockwise at a rotational speed (also referred to as a "corresponding rotational speed B") that corresponds to a rotational speed of the other rotor.

The paired rotating bodies, which are in contact with each other in the opening, are in a reverse rotation relationship such that, when the one rotating body rotates clockwise, the other rotating body rotates counterclockwise. Accordingly, the paired rotating bodies do not inhibit the rotation of each other, and thus the paired rotors, which are respectively in contact with these rotating bodies, can rotate smoothly.

Even when the corresponding rotational speed A differs from the corresponding rotational speed B, in other words, even when there is a speed difference between the rotational speed of the one rotor and the rotational speed of the other rotor, the paired rotating bodies, which are in contact with each other in the opening, rotate (rotate reversely) at the same rotational speed. As a result, for example, even in the case where the rotational shaft includes two rotational shafts that are arranged coaxially, where one of the rotational shafts and the one rotor are connected, and where the other rotational shaft and the other rotor are connected, in other words, even in the case where the paired rotors are not connected to each other, it is possible to absorb a rotational speed difference (slips) of the paired rotors via the paired rotating bodies that are in contact with and rotate reversely from each other.

Next, a description will be made on a case where the rotor is tilted during driving of the rotary electric machine and the other rotor moves away from the other rotating body. Even in this case, the paired rotors keep rotating about the axial direction with respect to the stator core by an electromagnetic force. In addition, since the one rotor is in contact with the one rotating body, the one rotating body rotates at the corresponding rotational speed A. Thus, the paired rotating bodies are in contact with each other in the opening and are in the reverse rotation relationship. Thus, even when the other rotor moves away from the other rotating body, the other rotating body keeps rotating at the corresponding rotational speed A.

Accordingly, even when the tilt of the rotor is corrected, and the other rotor comes into contact with the other rotating body, the other rotor, which rotates at a high speed, comes into contact with the other rotating body, which rotates at the corresponding rotational speed A. Therefore, it is possible to suppress inhibition of smooth rotation of the rotary electric machine and an increase in drag loss. When the paired rotors are connected to each other via the rotational shaft or the like, the corresponding rotational speed A ≈ the corresponding rotational speed B. Thus, when the other rotor comes into contact with the other rotating body, it is possible to further suppress the inhibition of the smooth rotation of the rotary electric machine and the increase in the drag loss.

### In case of (2)

This case is similar to the case of (1) above where the rotor is tilted and the other rotor moves away from the other rotating body. Even when the rotor that is not in contact with the rotating body is tilted by the vibration or the like during driving of the rotary electric machine, for example, and comes into contact with the rotating body, due to the constant rotation of the rotating body that is not in contact with the rotor, it is possible to suppress the inhibition of the smooth rotation of the rotary electric machine and the increase in the drag loss.

As described above, according to the invention, not only the occurrence of the abrasion, the breakage, the rotation lock, and the seizure is suppressed, but also the improvement in the output torque, the suppression of the increase in the drag loss, the increase in the torque density, the smooth rotation of the rotor, and the like can be achieved. Therefore, high efficiency of the rotary electric machine can be achieved.

The rotary electric machine may be configured that the stator core has an annular shape, that the paired rotors are provided to oppose each other in the axial direction in the manner to sandwich the stator core from both of the sides in the axial direction of the rotational shaft, that the opening is provided in the stator core in a manner to penetrate the stator core in the axial direction, and that the paired rotating bodies are provided in the opening in a manner to be rotatable about the radial direction and be aligned in the axial direction, and a portion of each of the rotating bodies that protrudes outward in the axial direction from the opening is in contact with at least one of the paired rotors.

According to this configuration, in a so-called axial gap type rotary electric machine, the high efficiency of the rotary electric machine can be achieved in the same manner as described above.

The rotary electric machine may be configured that the stator core has a cylindrical shape, that the paired rotors are provided to oppose each other in the radial direction in the manner to sandwich the stator core from the radially inner and outer sides of the rotational shaft, that the opening is provided in the stator core in a manner to penetrate the stator core in the radial direction, and that the paired rotating bodies are provided in the opening in a manner to be rotatable about the axial direction and be aligned in the radial direction, and a portion of each of the rotating bodies that protrudes radially inward and outward from the opening is in contact with at least one of the paired rotors.

According to this configuration, in a so-called radial gap type rotary electric machine, the high efficiency of the rotary electric machine can be achieved in the same manner as described above.

In the rotary electric machine, each of the rotating bodies may be made of a magnetic body.

According to this configuration, the rotor and the stator are connected via the rotating body, which is made of the magnetic body. Thus, compared to a case where the rotor and the stator do not contact each other via an air gap that is filled with air having low relative magnetic permeability, it is possible to significantly reduce magnetic resistance between the rotor and the stator. As a result, magnetic flux easily flows from the stator to the rotor side. Therefore, the torque density can further be increased, and thus the high efficiency of the rotary electric machine can be achieved further reliably.

Furthermore, in the rotary electric machine, an electromagnetic fluid may be interposed between the rotating body and the rotor.

For example, in the case where the rotating body has a spherical shape, basically (unless the shape of the rotor is devised), the rotating body is in point contact with the rotor. Meanwhile, for example, in the case where the rotating body has a columnar shape, basically, the rotating body is in line contact with the rotor. However, according to this configuration, the rotating body can be in surface contact with the rotor via the electromagnetic fluid. As a result, the magnetic flux further easily flows from the stator to the rotor side. Therefore, the torque density can further be increased, and thus the high efficiency of the rotary electric machine can be achieved further reliably.

### [Advantageous Effects of Invention]

As it has been described so far, according to the rotary electric machine in the invention, in the rotary electric machine in which the plural rotors are arranged to sandwich the stator, the high efficiency of the rotary electric machine can be achieved.

### [Brief Description of Drawings]

[FIG. 1] FIG. 1 is a cross-sectional view that schematically illustrates a rotary electric machine according to a first embodiment of the invention and is taken along a plane passing through a rotation axis of the rotary electric machine.
[FIG. 2] FIG. 2 is an arrow view that schematically illustrates a stator and is taken along line II-II in FIG. 1.
[FIG. 3] FIG. 3 is an arrow view that schematically illustrates a rotor and is taken along line III-III in FIG. 1.
[FIG. 4] FIG. 4 is a view that schematically illustrates a mode of supporting the paired rollers.
[FIG. 5] FIG. 5 is a view that schematically illustrates a relationship between the rotor and a rotating body when the rotary electric machine is driven, and is viewed in a radial direction.
[FIG. 6] FIG. 6 is a view that schematically illustrates a relationship between a rotor and a rotating body according to a first modified example of the first embodiment in the invention, and is viewed in the radial direction.
[FIG. 7] FIG. 7 is a view that schematically illustrates a contact mode example between the rotor and the rotating body in the first embodiment of the invention.
[FIG. 8] FIG. 8 is a view that schematically illustrates a contact mode between a rotor and a rotating body according to a second modified example of the first embodiment in the invention.
[FIG. 9] FIG. 9 is a cross-sectional view that schematically illustrates a rotary electric machine according to a third modified example of the first embodiment in the invention and is taken along a plane passing through a rotation axis of the rotary electric machine.
[FIG. 10] FIG. 10 is a cross-sectional view that schematically illustrates a rotary electric machine according to a second embodiment of the invention and is taken along a plane passing through a rotation axis of the rotary electric machine.
[FIG. 11] FIG. 11 is an arrow view that is taken along line XI-XI in FIG. 10.
[FIG. 12] FIG. 12 is a cross-sectional view that schematically illustrates a rotary electric machine according to a first reference example and is taken along a plane passing through a rotation axis of the rotary electric machine.
[FIG. 13] FIG. 13 is a cross-sectional view that schematically illustrates a rotary electric machine according to a second reference example and is taken along a plane passing through a rotation axis of the rotary electric machine.
[FIG. 14] FIG. 14 is an arrow view that schematically illustrates a stator and is taken along line XIV-XIV in FIG. 13.
[FIG. 15] FIG. 15 is a view that schematically illustrates a relationship between the rotor and a rotating body when the rotary electric machine is driven, and is viewed in the radial direction.

### [Description of Embodiments]

A description will hereinafter be made on embodiments of the invention with reference to the drawings.

### (First Embodiment)

### - Overall Configuration of Rotary Electric Machine -

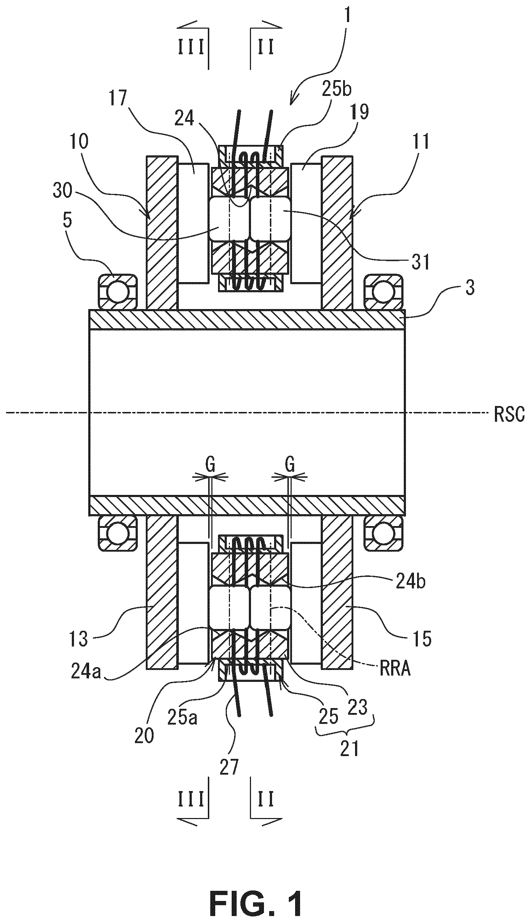

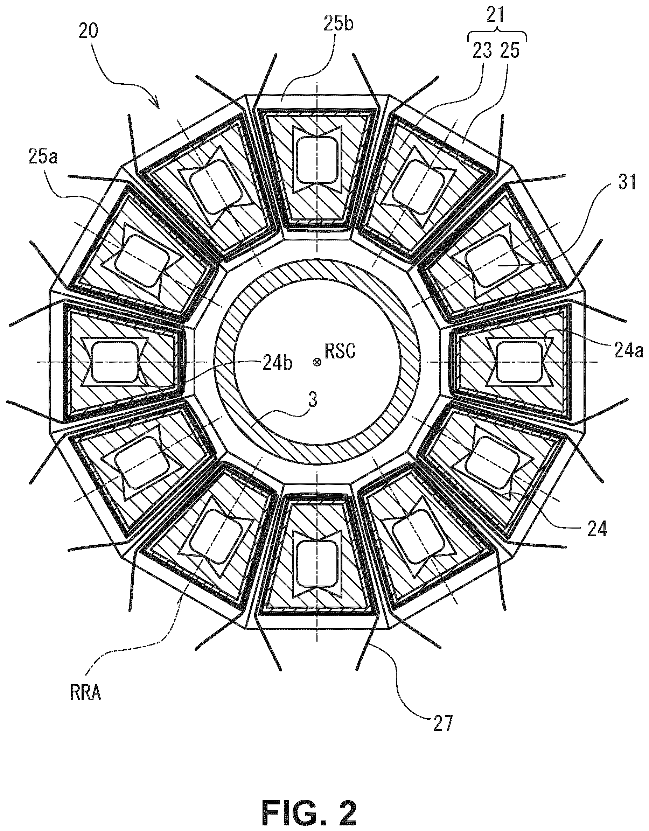

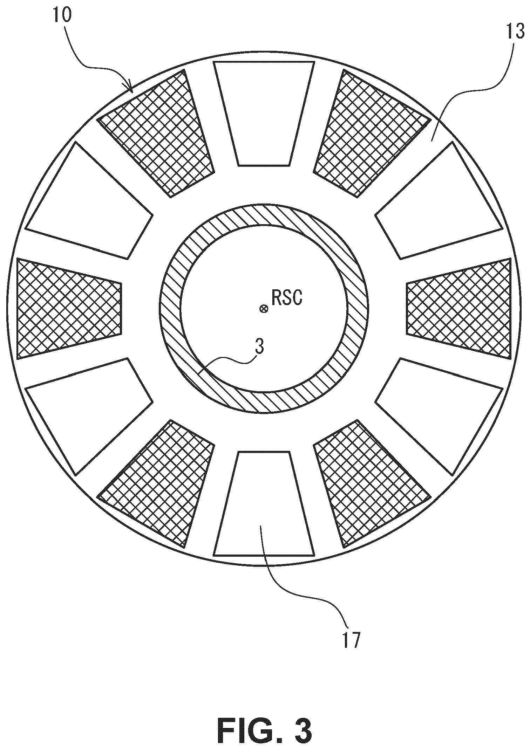

FIG. 1 is a cross-sectional view that schematically illustrates a rotary electric machine 1 according to the present embodiment and is taken along a plane passing through a rotation axis RSC of the rotary electric machine 1, FIG. 2 is an arrow view that schematically illustrates a stator 20 and is taken along line II-II in FIG. 1, and FIG. 3 is an arrow view that schematically illustrates a rotor 10 and is taken along line III-III in FIG. 1. This rotary electric machine 1 is a so-called axial gap type rotary electric machine in which the rotors 10, 11 and the stator 20 are arranged with a gap therebetween in an axial direction (a direction in which the rotation axis RSC extends), and is a permanent-magnet synchronous rotary electric machine that is rotationally driven by using permanent magnets 17, 19. The rotary electric machine 1 is used as an in-wheel motor in a vehicle, a motor of a robot arm joint, or the like, for example, but can also be used as a generator. As illustrated in FIG. 1, the rotary electric machine 1 includes a rotor shaft 3, the stator 20, and the paired rotors 10, 11.

### - Rotor Shaft -

The rotor shaft (rotational shaft) 3 is made of metal such as iron, and is formed in a cylindrical shape as illustrated in FIGs. 2 and 3. As illustrated in FIG. 1, the rotor shaft 3 is rotatably supported by a motor housing (not illustrated) or the like via a bearing 5.

### - Stator -

### <Overall Configuration of Stator>

As illustrated in FIG. 1, the stator 20 includes a stator core 21, a stator coil 27, and paired rollers 30, 31. As illustrated in FIG. 2, the stator core 21 includes 12 core body portions 23 and 12 coil mounting portions 25.

Each of the core body portions 23 is formed in a trapezoidal columnar shape that extends in the axial direction. Each of the core body portions 23 is provided with an opening 24 having a rectangular cross section that penetrates the respective core body portion 23 in the axial direction. As illustrated in FIGs. 1 and 2, in each of the core body portions 23, a portion that defines a radially outer side of the opening 24 is formed with two conical outer support portions 24a, a diameter of each of which is reduced radially inward, and which are aligned in the axial direction. In addition, in each of the core body portions 23, a portion that defines a radially inner side of the opening 24 is formed with two conical inner support portions 24b, a diameter of each of which is reduced radially outward, and which are aligned in the axial direction.

Each of the coil mounting portions 25 has: a frame 25a in a trapezoidal cylindrical shape that extends in the axial direction; and a flange 25b that protrudes outward from both end portions in the axial direction of the frame 25a. As illustrated in FIGs. 1 and 2, in each of the coil mounting portions 25, the core body portion 23 is fitted to an inner hollow portion of the frame 25a, and the stator coil 27 is wound around a portion that is defined by the frame 25a and both of the flanges 25b.

As illustrated in FIG. 2, in each of the 12 coil mounting portions 25, to which the coil body portion 23 is fitted, and around which the stator coil 27 is wound, oblique sides of the flange 25b in the trapezoidal frame shape are connected to each other in a circumferential direction, and the stator core 21 is thereby formed in an annular shape. More precisely, the stator core 21 is formed in an annular shape, an outer peripheral shape of which is an equilateral dodecagon and an inner peripheral shape of which is an equilateral dodecagon.

### <Pair of Rollers>

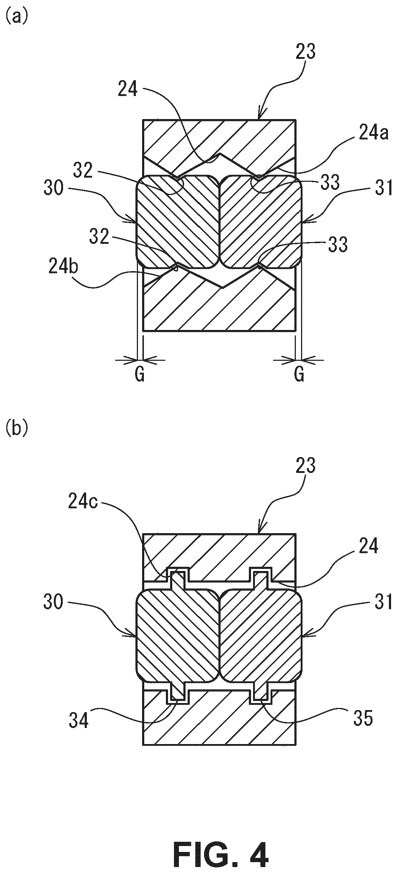

FIG. 4 is a view that schematically illustrates a mode of supporting the paired rollers 30, 31. In each of the openings 24, the paired rollers (rotating bodies) 30, 31 are rotatably provided in a manner to be aligned in the axial direction. Each of the rollers 30, 31 is made of a magnetic body. The magnetic body is not particularly limited as long as it can be magnetic, and examples thereof include ferromagnetic bodies that are made of iron, nickel, cobalt, and gadolinium. The roller 30 is formed in a columnar shape and, as illustrated in FIG. 4(a), is provided with a dent 32 in both end portions in the axial direction. The roller 31 that forms the pair with the roller 30 is formed in the same shape and size as the roller 30, that is, in the columnar shape, and is provided with a dent 33 in both end portions in the axial direction.

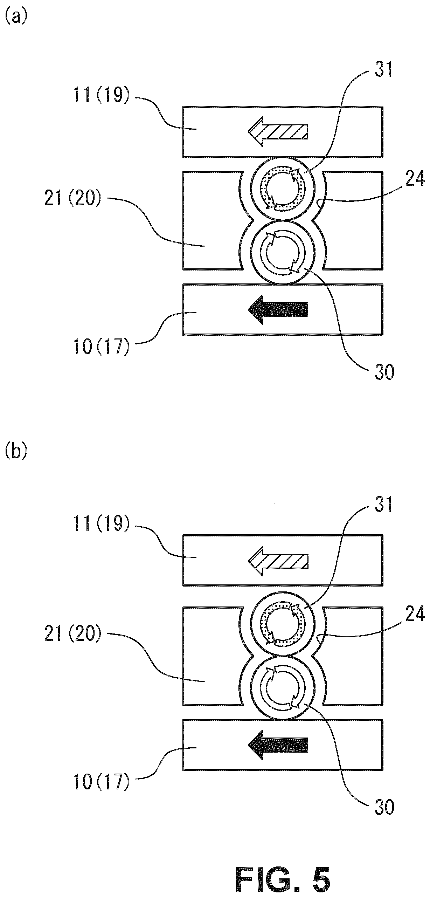

As illustrated in FIG. 4(a), top portions of the outer and inner support portions 24a, 24b are fitted to the dents 32, 33, and the rollers 30, 31 are thereby attached to the core body portion 23. In this way, in the opening 24, each of the rollers 30, 31 can rotate about a direction that connects the top portion of the outer support portion 24a and the top portion of the inner support portion 24b, that is, a radial direction of the stator core 21 (see an axis RRA in FIGs. 1 and 2). These paired rollers 30, 31 are in contact with each other in the opening 24. In this way, the paired rollers 30, 31 are in a reverse rotation relationship such that, when the roller 30 rotates, for example, clockwise, about the radial direction, the roller 31 rotates counterclockwise about the radial direction (see FIG. 5).

A diameter of the roller 30 is set such that the roller 30 comes into contact with the roller 31 in the opening 24 and protrudes axially outward (leftward in FIG. 4(a)) from the opening 24 by a length G. Similarly, a diameter of the roller 31 is set such that the roller 31 comes into contact with the roller 30 in the opening 24 and protrudes axially outward (rightward in FIG. 4(a)) from the opening 24 by the length G. That is, the diameter of each of the rollers 30, 31 is set to be equal to a sum of 1/2 of an axial length of the core body portion 23 (= a thickness of the stator core 21) and the protruding length G.

The support mode of the paired rollers 30, 31 is not limited to the mode illustrated in FIG. 4(a) and may be a mode as illustrated in FIG. 4(b), for example. More specifically, as illustrated in FIG. 4(b), shaft portions 34, 35 are provided in both of the end portions in the axial direction of the columnar rollers 30, 31, respectively, and such shaft portions 34, 35 are inserted in respective concave portions 24c that are formed in portions defining the radially outer and inner sides of the opening 24. In this way, the paired rollers 30, 31 may be supported in a manner to be rotatable about the radial direction.

The thus-configured stator 20 is fixed to the motor housing or the like such that an axis of the annular stator core 21 is coaxial with an axis of the rotor shaft 3. In the stator 20 arranged in such a manner, when a three-phase alternating current is supplied to the stator coil 27, a rotating magnetic field for causing the rotation of the rotors 10,11 is formed.

### - Rotor -

The rotor 10 is made of metal having magnetism (for example, iron) and, as illustrated in FIGs. 1 and 3, includes a rotor core 13 and a permanent magnet 17. The rotor 11 is also made of the metal having the magnetism and, as illustrated in FIG. 1, includes a rotor core 15 and a permanent magnet 19. Since the rotor 10 and the rotor 11 have the same structure, a description will hereinafter be made on the rotor 10 as a representative example.

As illustrated in FIGs. 1 and 3, the rotor core 13 is formed in an annular shape that is substantially in the same size as the stator core 21, and an inner peripheral edge portion thereof is connected (fixed) to an outer peripheral portion of the rotor shaft 3 by shrink fitting, welding, or the like, for example. The 12 permanent magnets 17 are attached to the rotor core 13.

As illustrated in FIG. 3, the permanent magnets 17 are each formed in a trapezoidal plate shape. Although the type of each of the permanent magnets 17, 19 is not particularly limited, examples thereof include a ferrite magnet, a neodymium magnet, a samarium cobalt magnet, and an alnico magnet. The 12 permanent magnets 17 are arranged at spaced intervals in a circumferential direction such that N poles (see cross-hatching in FIG. 3) and S poles are alternately arranged and that upper bottoms of trapezoids face radially inward. In this way, the 12 permanent magnets 17 are arranged to form an annular shape in the rotor core 13. A radial position of each of the permanent magnets 17 in the rotor core 13 corresponds to a radial position of the roller 30 in the stator core 21.

As illustrated in FIG. 1, the thus-configured paired rotors 10, 11 oppose each other in the axial direction in a manner to sandwich the stator core 21 from both sides in the axial direction, and are each connected to the rotor shaft **3.** In detail, the rotor 10 is arranged such that each of the permanent magnets 17 attached to the rotor core 13 comes into contact with the portion of the roller 30 that protrudes axially outward from the opening 24. Meanwhile, the rotor 11 is arranged such that each of the permanent magnets 19 attached to the rotor core 15 comes into contact with the portion of the roller 31 that protrudes axially outward from the opening 24. In other words, the paired rotors 10, 11 are arranged such that a clearance between each of the permanent magnets 17, 19 and respective one of the rollers 30, 31 becomes zero in a non-driven state of the rotary electric machine 1.

As described above, since each of the rollers 30, 31 protrudes from the opening 24 by the protruding length G, the paired rotors 10, 11 oppose each other in the manner to sandwich the stator core 21 from both of the sides in the axial direction, and are each arranged by keeping the predetermined gap G from the stator core 21. In the circumferential direction, the paired rotors 10, 11 are arranged such that, for example, the N poles and the S poles of the permanent magnets 17 and the N poles and the S poles of the permanent magnets19 opposing those of the permanent magnets 17 in the axial direction are opposite to each other.

By arranging the paired rotors 10, 11 as described above, the paired rotors 10, 11 rotate in the same direction about the axial direction with respect to the stator 20 due to repulsion/attraction between the magnetic field from the stator 20 and the permanent magnets 17, 19, and the rotor shaft 3 rotates accordingly. Here, the magnetic field from the stator 20 is generated on both of the sides of the stator 20 in the axial direction in the case of the axial gap type. However, in the present embodiment, since the paired rotors 10, 11 are provided in the manner to sandwich the stator core 21 in the axial direction, it is possible to improve output torque of the rotary electric machine 1 with respect to the size thereof in comparison with a case where the single rotor is provided for the single stator.

### - Operation/Effects -

Next, a description will be made on operation and effects of the rotary electric machine 1 as described above. In order to facilitate understanding of the invention, prior to such description, a rotary electric machine according to a reference example will be described.

### <Rotary Electric Machine in Reference Example 1>

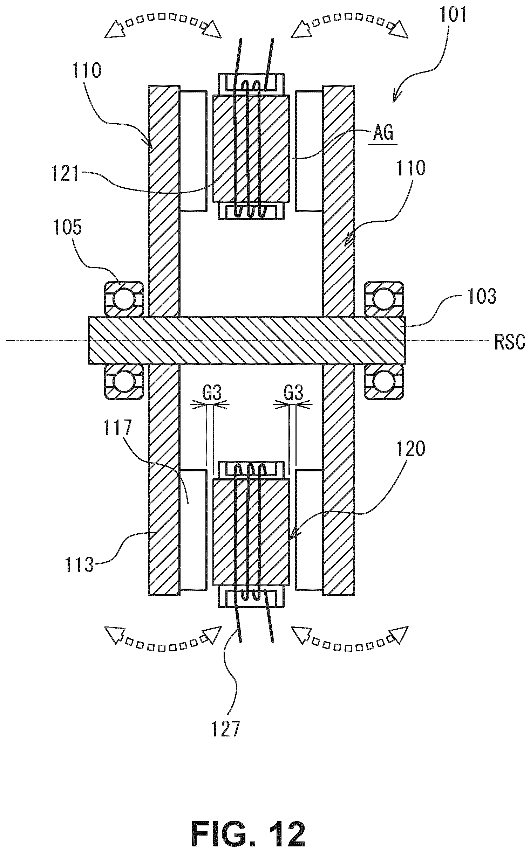

FIG. 12 is a cross-sectional view that schematically illustrates a rotary electric machine 101 according to a first reference example and is taken along a plane passing through a rotation axis of the rotary electric machine 101. As illustrated in FIG. 12, the rotary electric machine 101 according to the first reference example is the same as the rotary electric machine 1 in the present embodiment in a point of including: a rotor shaft 103 that is rotatably supported by the motor housing or the like via a bearing 105; a stator 120 in which a stator coil 127 is wound around a stator core 121; and paired rotors 110 in each of which a permanent magnet 117 is attached to a rotor core 113, and which are provided to sandwich the stator core 121. However, in the rotary electric machine 101 according to the first reference example, unlike the rotary electric machine 1 in the present embodiment, the paired rollers 30, 31 are not provided in the stator 120, and each of the rotors 110 and the stator 120 are arranged while keeping a gap G3 in the axial direction therebetween via an air gap AG.

Here, the air gap AG, which is located between each of the rotors 110 and the stator 120 and is filled with air having low relative magnetic permeability, has high magnetic resistance. Thus, it is considered that the gap G3 between the each of rotors 110 and the stator 120 is preferably as narrow as possible. However, it has been known that an increased diameter of each of the rotors 110 causes a tilt of the rotor 110 as indicated by white dashed arrows in FIG. 12 due to vibration during driving the rotary electric machine 101 or, for example, application of a lateral force on a tire in a case of the in-wheel motor.

Thus, in the rotary electric machine 101 according to the first reference example, when the gap G3 between each of the rotors 110 and the stator 120 is extremely narrowed, the rotor 110 that is tilted by the vibration or the like during driving of the rotary electric machine 101 possibly comes into contact with the stator 120 (the stator core 121), resulting in abrasion, breakage, or rotation lock.

Meanwhile, it is assumed that, when the gap G3 between each of the rotors 110 and the stator 120 is increased to avoid the contact between the respective tilted rotor 110 and the stator 120 in the rotary electric machine 101 according to the first reference example, it is difficult to increase torque density due to presence of the wide air gap AG, and thus is difficult to improve efficiency of the rotary electric machine 101.

### <Rotary Electric Machine in Second Reference Example>

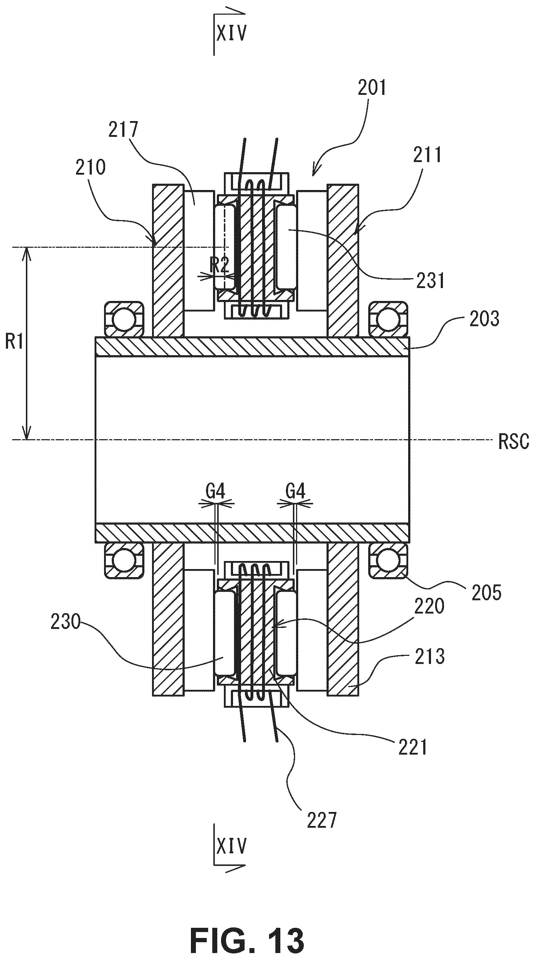

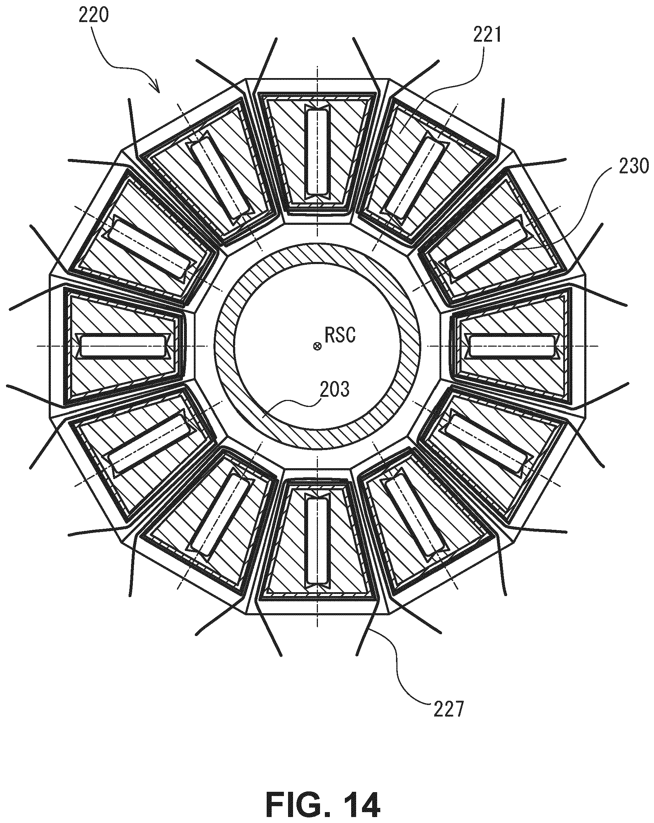

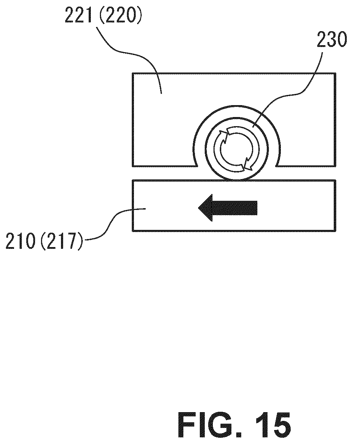

FIG. 13 is a cross-sectional view that schematically illustrates a rotary electric machine 201 according to a second reference example and is taken along a plane passing through a rotation axis RSC of the rotary electric machine 201, FIG. 14 is an arrow view that schematically illustrates a stator 220 and is taken along line XIV-XIV in FIG. 13, and FIG. 15 is a view that schematically illustrates a relationship between a rotor 210 and a roller 230 when the rotary electric machine 201 is driven and that is seen in the radial direction. As illustrated in FIG. 13, the rotary electric machine 201 according to the second reference example is also the same as the rotary electric machine 1 in the present embodiment in a point of including: a rotor shaft 203 that is rotatably supported by the motor housing or the like via a bearing 205; a stator 220 in which a stator coil 227 is wound around a stator core 221; and paired rotors 210, 211 in each of which a permanent magnet 217 is attached to a rotor core 213, and which are provided to sandwich the stator core 221.

In addition, the rotary electric machine 201 according to the second reference example is the same as the rotary electric machine 1 in the present embodiment in that, unlike the rotary electric machine 101 according to the first reference example, as illustrated in FIGs. 13 and 14, paired rollers 230, 231 are provided to the stator core 221 in a manner to be rotatable about the radial direction and that these paired rollers 230, 231 are in contact with the paired rotors 210, 211, respectively. However, the rotary electric machine 201 according to the second reference example differs from the rotary electric machine 1 in the present embodiment in that an opening that penetrates the stator core 221 in the axial direction is not provided, and thus, the paired rollers 230, 231 do not contact each other.

In the thus-configured rotary electric machine 201, when the rotor 210 rotates as indicated by a black arrow in FIG. 15 during driving of the rotary electric machine 201, the roller 230 that is in contact with the rotor 210 (more precisely, the permanent magnet 217) rotates as indicated by white arrows in FIG. 15. Thus, unlike the rotary electric machine 101 according to the first reference example, even when the rotor 210 is tilted due to the vibration or the like during driving of the rotary electric machine 201, the rotor 210 abuts the roller 230, which is rotatably provided, and thus the rotor 210 does not contact the stator core 221. Therefore, occurrence of abrasion, breakage, or rotation lock is hindered.

Here, there is a significant difference between a radius of each of the rotors 210, 211 (more precisely, a distance R1 from a rotation center of each of the rotors 210, 211 to a center of respective one of the rollers 230, 231) and a radius R2 of each of the rollers 230, 231. Thus, the rollers 230, 231 each rotate at a rotational speed that is (R1/R2) times a rotational speed of each of the rotors 210, 211 that rotate at a high speed. For this reason, as a protruding length G4 of each of the rollers 230, 231 (a gap between each of the rotors 210, 211 and the stator core 221) is reduced, the roller 230, 231 rotate at a high speed, and seizure tends to occur. As described above, in the rotary electric machine 201 according to the second reference example, there is a certain limitation on the reduction of the gap G4 between each of the rotors 210, 211 and the stator core 221 by reducing the radius R2 of each of the rollers 230, 231. Thus, there is a problem of a difficulty in increasing the torque density and thus a difficulty in improving efficiency of the rotary electric machine 201.

In addition, occurrence of such a situation is also assumed that, in the rotary electric machine 201 according to the second reference example, when the rotors 210, 211 are tilted due to the vibration or the like during driving of the rotary electric machine 201, for example, the one rotor 210 and the one roller 230 separate from each other. In such a situation, there is a possibility that, while the paired rotors 210, 211 and the other roller 231 keep rotating, rotation of the one roller 230 is stopped.

In such a situation, when the tilt of the rotor 210 is corrected, the rotor 210, which rotates at the high speed, comes into contact with the roller 230, the rotation of which is stopped. As a result, the smooth rotation of the rotary electric machine 201 is possibly hindered (the rotational speed thereof is possibly reduced), and drag loss is possibly increased, which further possibly leads to the reduced efficiency of the rotary electric machine 201.

These problems in the rotary electric machine 201 according to the second reference example are problems that possibly occur to a structure in which a thrust bearing is interposed between each of the rotors 210, 211 and the stator core 221.

### <Rotary Electric Machine in the Present Embodiment>

In view of the above, in the rotary electric machine 1 according to the present embodiment, as described above, the paired rollers 30, 31, which partially protrude to both of the outer sides of the stator core 21, are provided in the opening 24 provided through the stator core 21, and these paired rollers 30, 31 constantly rotate in conjunction with the rotation of the rotors 10, 11.

First, the paired rollers 30, 31, which are provided in each of the openings 24, protrude axially outward from the respective opening 24. Thus, even when the predetermined gap G between each of the rotors 10, 11 and the stator core 21 is narrowed, the rotors 10, 11, which are tilted by the vibration of the rotary electric machine 1 or the like, respectively come into contact with the rollers 30, 31, which are rotatably provided, and do not contact the stator core 21 itself. Thus, it is possible to suppress the occurrence of the abrasion, the breakage, and the rotation lock.

Secondly, unlike interposition of a bearing or the like between each of the rotors 10, 11 and the stator 20, for example, only a part of each of the rollers 30, 31 protrudes axially outward from the opening 24. In other words, the sizes of the rollers 30, 31 can be absorbed by the width, the thickness, or the like of the stator core 21. Thus, even when the diameters of the rollers 30, 31 are increased, the predetermined gap G between each of the rotors 10, 11 and the stator core 21 can be narrowed as much as possible. In this way, it is possible to increase the torque density by narrowing the predetermined gap G between each of the rotors 10, 11 and the stator core 21 while increasing the diameters of the rollers 30, 31 to suppress the occurrence of the seizure.

FIGs. 5 is a view that schematically illustrates a relationship between the rotors 10, 11 and the rollers 30, 31 when the rotary electric machine is driven, and is viewed in the radial direction. In the rotary electric machine 1 in the present embodiment, the rotor 10 (more precisely, the permanent magnet 17) is in contact with the roller 30. Thus, as indicated by a black arrow in FIG. 5(a), when the rotor 10 rotates about the axial direction with respect to the stator core 21, as indicated by white arrows in FIG. 5(a), the roller 30 rotates about the radial direction and clockwise in FIG. 5(a) at a rotational speed (hereinafter referred to as a "first corresponding rotational speed") that corresponds to the rotational speed of the rotor 10. The first corresponding rotational speed is (X1/Y1) times the rotational speed of the rotor 10, for example, when a distance from a rotation center of each of the rotors 10, 11 to a center of respective one of the rollers 30, 31 is set as X1, and a radius of each of the rollers 30, 31 is set as Y1.

Similarly, the rotor 11 is in contact with the roller 31. Thus, as indicated by a hatched arrow in FIG. 5(a), when the rotor 11 rotates about the axial direction with respect to the stator core 21, as indicated by dotted arrows in FIG. 5(a), the roller 31 rotates about the radial direction and counterclockwise in FIG. 5(a) at the first corresponding rotational speed.

Since the paired rollers 30, 31, which are in contact with each other in the opening 24, are in the reverse rotation relationship as described above, the paired rollers 30, 31 do not inhibit the rotation of each other. Thus, the paired rotors 10, 11, which are respectively in contact with these rollers 30, 31, can rotate smoothly.

Next, a description will be made on a case where the rotors 10, 11 are tilted during driving of the rotary electric machine 1 and, as illustrated in FIG. 5(b), the rotor 11 moves away from the roller 31. Also, in this case, the paired rotors 10, 11 rotate due to the repulsion/attraction between the magnetic field from the stator 20 and the permanent magnets 17, 19. Thus, as indicated by a black arrow and a hatched arrow in FIG. 5(b), the paired rotors 10, 11 keep rotating about the axial direction with respect to the stator core 21. In addition, since the rotor 10 is in contact with the roller 30, as indicated by white arrows in FIG. 5(b), the roller 30 rotates at the first corresponding rotation speed. Thus, the paired rollers 30, 31 are in contact with each other in the opening 24, and both 30, 31 are in the reverse rotation relationship. Thus, even when the rotor 11 moves away from the roller 31, as indicated by dotted arrows in FIG. 5(b), the roller 31 keeps rotating at the first corresponding rotational speed.

Therefore, when the tilt of the rotor 11 is corrected, and the rotor 11 comes into contact with the roller 31, the rotor 11, which rotates at the high speed, comes into contact with the roller 31, which rotates at the first corresponding rotational speed. Thus, it is possible to suppress inhibition of the smooth rotation of the rotary electric machine 1 and the increase in the drag loss.

As described above, according to the present embodiment, not only the occurrence of the abrasion, the breakage, the rotation lock, and the seizure is suppressed, but also the improvement in the output torque, the suppression of the increase in the drag loss, the increase in the torque density, the smooth rotation of the rotors 10, 11, and the like can be achieved. Thus, the high efficiency of the rotary electric machine 1 can be achieved.

Furthermore, the rotors 10, 11 and the stator 20 are respectively connected via the rollers 30, 31, which are made of the magnetic bodies. Thus, for example, compared to a case where the rotor 110 and the stator 120 do not contact each other via the air gap AG, which is filled with the air having the low relative magnetic permeability, as in the rotary electric machine 101 according to the first reference example, it is possible to significantly reduce the magnetic resistance between each of the rotors 10, 11 and the stator 20. As a result, magnetic flux easily flows from the stator 20 to the rotors 10, 11. Therefore, the torque density can further be increased, and thus the high efficiency of the rotary electric machine 1 can be achieved further reliably.

### (First Modified Example)

This modified example differs from the first embodiment in that the paired rollers are arranged such that only a clearance between one of the rotors and respective one of the rollers becomes zero in the non-driven state of the rotary electric machine. Hereinafter, a description will be centered on differences from the first embodiment.

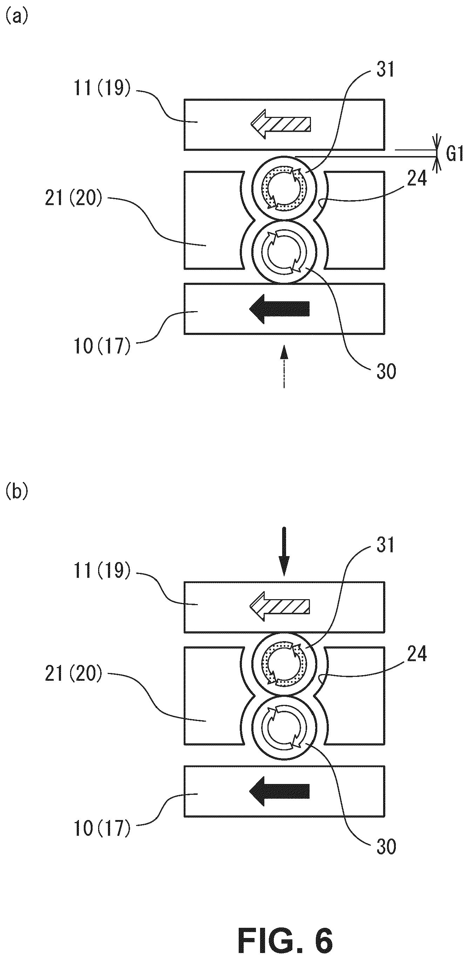

FIG. 6 is a view that schematically illustrates a relationship between the rotors 10, 11 and the rollers 30, 31 according to the present modified example, and is viewed in the radial direction. Here, FIG. 6(a) illustrates a case where the rotors 10, 11 are not tilted or a case where a force is applied to the rotors 10, 11 in a direction of a dashed arrow. FIG. 6(b) illustrates a case where a force is applied to the rotors 10, 11 in a direction of a bold arrow.

In the rotary electric machine 1 according to the present modified example, similar to the first embodiment, the rotor 10 is connected to the rotor shaft 3 such that the permanent magnet 17 that is attached to the rotor core 13 comes into contact with the roller 30. Meanwhile, the rotor 11 differs from that in the first embodiment, and is connected to the rotor shaft 3 such that, as illustrated in FIG. 6(a), the permanent magnet 19 attached to the rotor core 15 keeps the predetermined gap G1 from the roller 31.

As illustrated in FIG. 6(a), when the rotors 10, 11 are not tilted, or when the force is applied to the rotors 10, 11 in the direction of the dashed arrow, the thus-configured rotary electric machine 1 according to the present modified example is brought into the same state as the state illustrated in FIG. 5(a). That is, as indicated by a black arrow and a hatched arrow in FIG. 6(a), the paired rotors 10, 11 keep rotating about the axial direction with respect to the stator core 21. In addition, when the roller 30 rotates at the first corresponding rotational speed as indicated by white arrows in FIG. 6(a), the roller 31 also keeps rotating at the first corresponding rotational speed as indicated by dotted arrows in FIG. 6(a).

Thus, as illustrated in FIG. 6(b), even when the rotor 11 that is not in contact with the roller 31 is tilted by the vibration of the rotary electric machine 1 or the like, for example, and comes into contact with the roller 31 in the state of rotating at the high speed, it is possible to suppress the inhibition of the smooth rotation of the rotary electric machine 1 and the increase in the drag loss due to the constant rotation of the roller 31 that is not in contact with the rotor 11 at the first corresponding rotational speed.

Thus, in the case illustrated in FIG. 6(b), the rotor 10 separates from the roller 30 while the rotor 11 comes into contact with the roller 31. In this case, as indicated by a black arrow and a hatched arrow in FIG. 6(b), the paired rotors 10, 11 keep rotating about the axial direction with respect to the stator core 21. In addition, since the rotor 11 is in contact with the roller 31, the roller 31 rotates as indicated by dotted arrows in FIG. 6(b). Thus, the paired rollers 30, 31 are in the reverse rotation relationship. Thus, even when the rotor 10 moves away from the roller 30, the roller 30 keeps rotating as indicated by white arrows in FIG. 6(b).

Therefore, when the tilt of the rotors 10, 11 is corrected, and the rotor 10 comes into contact with the roller 30, the rotor 10, which rotates at the high speed, comes into contact with the roller 30, which rotates at the first corresponding rotational speed. Thus, it is possible to suppress the inhibition of the smooth rotation of the rotary electric machine 1 and the increase in the drag loss.

### (Second Modified Example)

The present modified example differs from the first embodiment in that an electromagnetic fluid is interposed between a rotor and a roller. Hereinafter, a description will be centered on differences from the first embodiment.

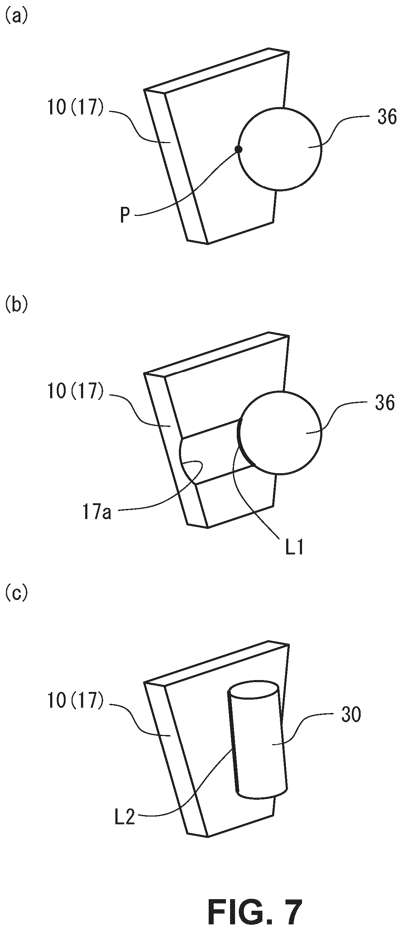

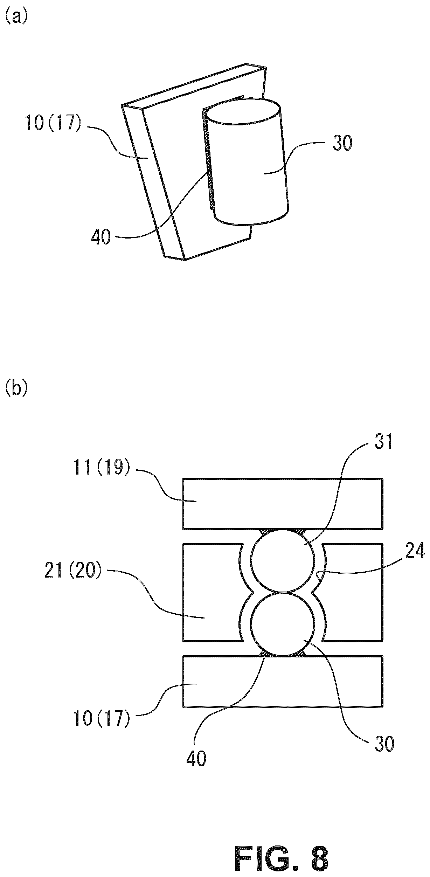

FIG. 7 is a view that schematically illustrates a contact mode example between the rotor 10 and respective one of rotating bodies 36, 30 in the first embodiment, and FIGs. 8(a) and 8(b) are views, each of which schematically illustrates a contact mode between the rotor 10 and the roller 30 according to the present modified example. In the first embodiment, in the case where a ball 36 is adopted as a "rotating body that is rotatably provided in the opening", as indicated by a reference sign P in FIG. 7(a), the rotor 10 (more precisely, the permanent magnet 17) is in point contact with the ball 36. In addition, even in the case where the ball 36 is adopted as the rotating body, and a shape of the rotor 10 is devised such that an arcuate groove 17a is formed in a bottom surface of the permanent magnet 17 as illustrated in FIG. 7(b), for example, the rotor 10 remains in point contact with the ball 36 as indicated by a reference sign L1 in FIG. 7(b). Furthermore, in the first embodiment, when the roller 30 is adopted as the rotating body, as indicated by a reference sign L2 in FIG. 7(c), the rotor 10 remains in line contact with the roller 30.

Thus, in the present modified example, in order to facilitate a flow of the magnetic flux from the stator 20 to the rotors 10, 11 side, as illustrated in FIG. 8(a), an electromagnetic fluid 40 is interposed between the roller 30 and the rotor 10. Here, the "electromagnetic fluid" refers to a magnetic fluid in which magnetic powder-granular materials such as iron powder are mixed into oil and stably dispersed using a surfactant. When several drops of such an electromagnetic fluid 40 are put between each of the rollers 30, 31 and respective one of the rotors 10, 11, due to influences of the permanent magnets 17, 19, the electromagnetic fluid 40 does not drop and remains between each of the rollers 30, 31 and respective one of the rotors 10, 11. As a result, as illustrated in FIG. 8(b), each of the rollers 30, 31 comes into surface contact with respective one of the rotors 10, 11 via the electromagnetic fluid 40.

As described above, according to the present modified example, each of the rollers 30, 31 is brought into surface contact with respective one of the rotors 10, 11 via the electromagnetic fluid 40. As a result, the flow of the magnetic flux from the stator 20 to the rotors 10, 11 side is further facilitated. Thus, the torque density can further be increased, and the high efficiency of the rotary electric machine 1 can be achieved further reliably.

### (Third Modified Example)

The present modified example differs from the first embodiment in that plural stators are provided. Hereinafter, a description will be centered on differences from the first embodiment.

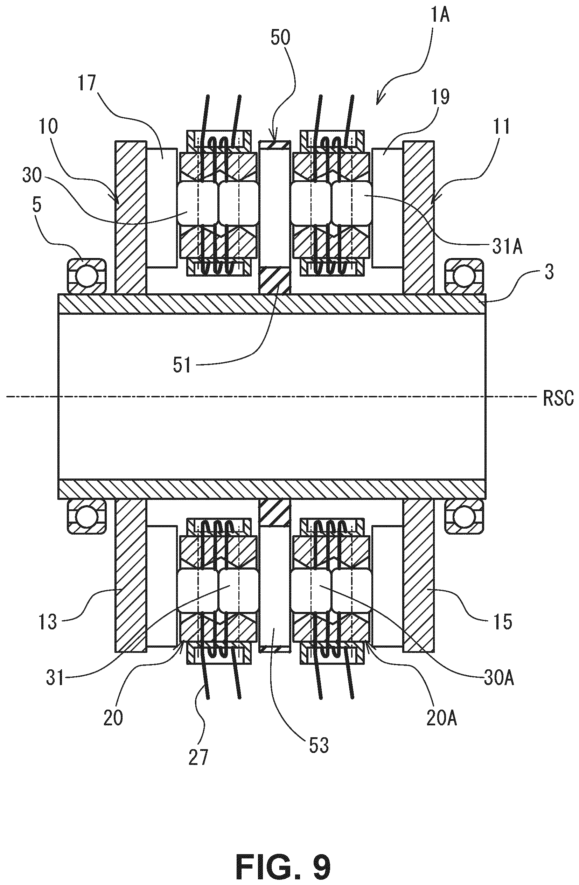

FIG. 9 is a cross-sectional view that schematically illustrates a rotary electric machine 1A according to the present modified example and is taken along a plane passing through a rotation axis RSC of the rotary electric machine 1A. As illustrated in FIG. 9, this rotary electric machine 1A includes the rotor shaft 3, two stators 20, 20A, and the three rotors 10, 11, 50. The stator 20A has the same structure as the stator 20 including that rollers 30A, 31A are the same as the rollers 30, 31. The two stators 20, 20A are fixed to the motor housing or the like in a manner to oppose each other in the axial direction.

As illustrated in FIG. 9, the rotor 50 includes a rotor core 51 and a permanent magnet 53. The rotor core 51 is made of resin and formed in an annular shape having the same size as the rotor cores 13, 15. An inner peripheral edge portion of the rotor core 51 is connected to an outer peripheral portion of the metallic rotor shaft 3 by an appropriate method using insert molding, a bolt, or the like, for example. In the rotor core 51, the 12 permanent magnets 53 that are equivalent to the permanent magnets 17, 19 are embedded in the same radial positions as the permanent magnets 17, 19.

As illustrated in FIG. 9, the three rotors 10, 11, 50 are connected to the rotor shaft 3 in a manner to oppose each other in the axial direction and sandwich the two stators 20, 20A. In detail, the rotor 10 is arranged such that the permanent magnet 17 attached to the rotor core 13 comes into contact with the roller 30 of the stator 20. In addition, the rotor 50 is arranged such that a surface on the rotor 10 side of the permanent magnet 53, which is embedded in the rotor core 51, comes into contact with the roller 31 of the stator 20 and that a surface on the rotor 11 side of the permanent magnet 53 comes into contact with the roller 30A of the stator 20A. Furthermore, the rotor 11 is arranged such that the permanent magnet 19 attached to the rotor core 15 comes into contact with the roller 31A of the stator 20A. As described above, in the rotary electric machine 1A according to the present modified example, the paired rotors 10, 50 are arranged to oppose each other in the axial direction in a manner to sandwich the stator 20, and the paired rotors 50, 11 are arranged to oppose each other in the axial direction in a manner to sandwich the stator 20A.

According to the present modified example, the rotating magnetic fields from the two stators 20, 20A are used, and the rotor 50 having the resinous rotor core 51 is adopted as one of the three rotors 10, 11, 50. Accordingly, compared to a configuration that all the rotor cores are made of metal, weight per unit length of a movable side (the rotor shaft 3 and the three rotors 10, 11, 50) can be reduced, and the high efficiency of the rotary electric machine 1A can further be achieved.

Here, the rotor cores 13, 15 of the rotors 10, 11, which are located at both end portions in the axial direction, among the three rotors 10, 11, 50 each have to be made of metal having magnetism in order to fulfill a role as a back yoke that causes the magnetic flux from the stators 20, 20A to move (flow) in a circumferential direction through themselves 13, 15 to a different path from a path from which the magnetic flux flows in. Meanwhile, the rotor core 51 of the rotor 50, which is located in the middle, only needs to allow the magnetic flux from the stators 20, 20A to pass through itself 51 and thus may be made of resin.

Therefore, as long as the rotor cores of the rotors, which are located in both end portions in the axial direction among the plural rotors are made of the metal, such a rotary electric machine may be adopted that (n + 1) rotors opposing each other in the axial direction are provided to sandwich the n (an integer of 3 or greater) stators and that the (n - 1) rotors other than those at both ends in the axial direction are made of the resin.

### (Second Embodiment)

The present embodiment differs from the first embodiment in that the invention is applied to a so-called radial gap type rotary electric machine. Hereinafter, a description will be centered on differences from the first embodiment.

### - Overall Configuration of Rotary Electric Machine -

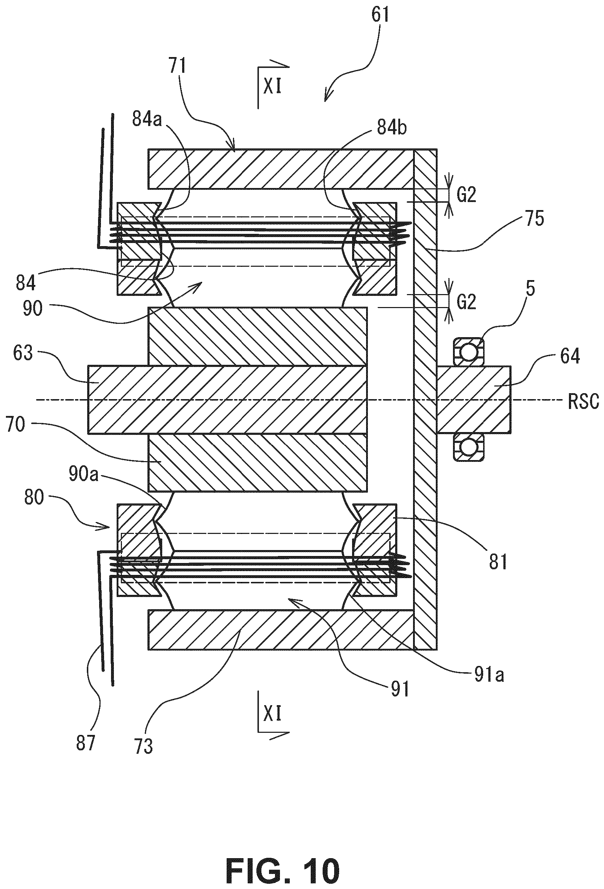

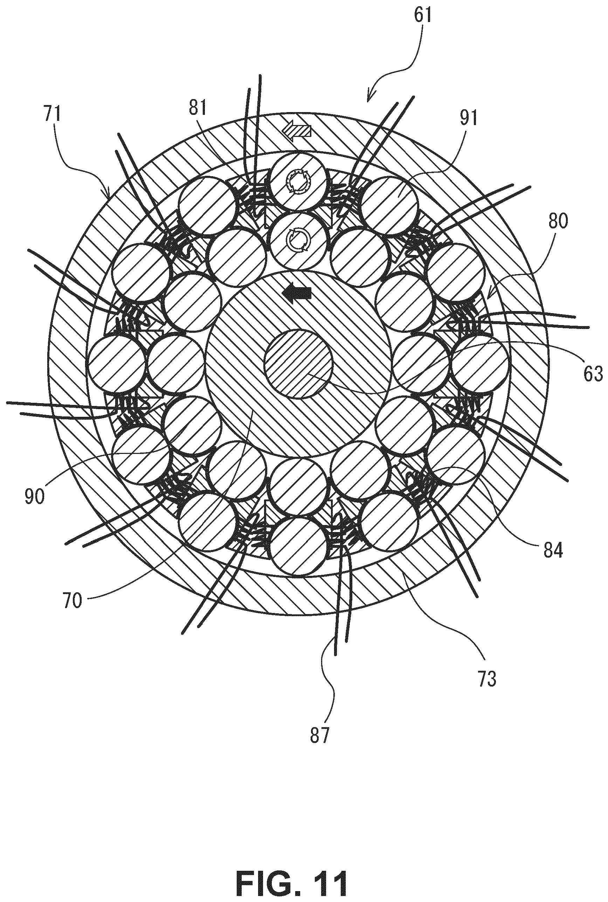

FIG. 10 is a cross-sectional view that schematically illustrates a rotary electric machine 61 according to the present embodiment and is taken along a plane passing through a rotation axis RSC of the rotary electric machine 61, and FIG. 11 is an arrow view that is taken along line XI-XI in FIG. 10. As illustrated in FIG. 10, this rotary electric machine 61 is a so-called radial gap type rotary electric machine in which rotors 70, 71 and a stator 80 are arranged while keeping a gap therebetween in an axial direction (a direction perpendicular to the rotation axis RSC), and is a permanent-magnet synchronous rotary electric machine that is rotationally driven by using a permanent magnet (not illustrated). This rotary electric machine 61 includes two rotor shafts 63, 64, the stator 80, and inner and outer rotors 70, 71.

### - Rotor Shaft -

The rotor shafts (rotational shafts) 63, 64 are made of the metal such as iron, are each formed in a columnar shape as illustrated in FIGs. 10 and 11, and are rotatably supported by the motor housing or the like via the bearing 5 such that an axis of the rotor shaft 63 is coaxial with an axis of the rotor shaft 64.

### - Stator -

As illustrated in FIGs. 10 and 11, the stator 80 includes a stator core 81, a stator coil 87, and inner and outer rollers 90, 91. The stator core 81 is formed in a cylindrical shape that extends in an axial direction, and the stator coil 87 is wound therearound. The stator 80 is fixed to the motor housing or the like such that an axis of the cylindrical stator core 81 is coaxial with axes of the rotor shafts 63, 64.

As illustrated in FIGs. 10 and 11, in the stator core 81, openings 84, each of which penetrates the stator core 81 in the radial direction, are provided at 12 positions at equally-spaced intervals in a circumferential direction. In each of the openings 84, a pair of the inner and outer rollers (rotating bodies) 90, 91 is provided in a manner to be aligned in the radial direction.

In a portion of the stator core 81 that defines one side of the opening 84 in the axial direction (a left side in FIG. 10), two concave portions 84a are formed in a manner to be aligned in the radial direction, and each of the concave portions 84a is recessed in a conical shape such that a diameter thereof is reduced toward the one side in the axial direction. In addition, in a portion of the stator core 81 that defines the other side of the opening 84 in the axial direction (a right side in FIG. 10), two concave portions 84b are formed in a manner to be aligned in the radial direction, and each of the concave portions 84b is recessed in the conical shape such that a diameter thereof is reduced toward the other side in the axial direction.

The inner and outer rollers 90, 91 are each made of a magnetic body. The inner roller 90 is formed in a columnar shape, and is formed in a conical shape in which a diameter of an end portion 90a on each side in the axial direction is reduced toward the outer side in the axial direction. The outer roller 91 that forms the pair with such an inner roller 90 is formed in the same shape and size as the inner roller 90, that is, in the columnar shape, and is formed in a conical shape in which a diameter of an end portion 91a on each side in the axial direction is reduced toward the outer side in the axial direction.

As illustrated in FIG. 10, since the end portions 90a, 91a on each side in the axial direction are fitted to the concave portions 84a, 84b, the thus-configured inner and outer rollers 90, 91 are attached to the stator core 81 and are rotatable about the axial direction in the opening 84. These inner and outer rollers 90, 91 are in contact with each other in the opening 84. In this way, the inner and outer rollers 90, 91 are in a reverse rotation relationship such that, for example, when the inner roller 90 rotates clockwise about the axial direction, the outer roller 91 rotates counterclockwise about the axial direction (see white arrows and dotted arrows in FIG. 11).

In addition, a diameter of the inner roller 90 is set such that the inner roller 90 comes into contact with the outer roller 91 in the opening 84 and protrudes radially inward from the opening 84 by a length G2. Similarly, a diameter of the outer roller 91 is set such that the outer roller 91 comes into contact with the inner roller 90 in the opening 84 and protrudes radially outward from the opening 84 by the length G2. That is, the diameters of the inner and outer rollers 90, 91 are set to be equal to a sum of 1/2 of a thickness of the stator core 81 and the protruding length G2.

### - Rotor -

The inner rotor 70 is made of metal having magnetism (for example, made of iron), and is formed in a cylindrical shape. A permanent magnet (not illustrated) is embedded in the inner rotor 70. An inner peripheral edge portion of the inner rotor 70 is connected (fixed) to an outer peripheral portion of the rotor shaft 63 by shrink fitting or the like, for example.

The outer rotor 71 is made of the metal having the magnetism (for example, made of iron). As illustrated in FIG. 10, the outer rotor 71 includes: a cylindrical rotor core 73; and a disk-shaped end plate 75 that is attached to an end portion on the other side in the axial direction of the rotor core 73, and is formed in a bottomed cylindrical shape. A permanent magnet (not illustrated) is embedded in the rotor core 73. The outer rotor 71 is fixed to the rotor shaft 64 by connecting a central portion of the disk-shaped end plate 75 and an end portion of the rotor shaft 64 by welding or the like, for example.

As illustrated in FIGs. 10 and 11, the thus-configured inner and outer rotors 70, 71 are arranged to oppose each other in the radial direction in a manner to sandwich the stator cores 81 from radially inner and outer sides. In detail, the inner rotor 70 is arranged such that an outer peripheral surface thereof comes into contact with a portion of the inner roller 90 that protrudes radially inward from the opening 84. Meanwhile, the outer rotor 71 is arranged such that an inner peripheral surface of the rotor core 73 comes into contact with a portion of the outer roller 91 that protrudes radially outward from the opening 84. In other words, the inner and outer rotors 70, 71 are arranged such that a clearance between each of the inner and outer rotors 70, 71 and respective one of the outer rollers 90, 91 becomes zero in a non-driven state of the rotary electric machine 61.

As described above, since each of the outer rollers 90, 91 has the protruding length G2 from the opening 84, the inner and outer rotors 70, 71 oppose each other in the manner to sandwich the stator core 81 from the radially inner and outer sides, and are each arranged by keeping the predetermined gap G2 from the stator core 81. By providing the inner and outer rotors 70, 71 as described above, the inner and outer rotors 70, 71 rotate in the same direction about the axial direction with respect to the stator 80 due to repulsion/attraction between a magnetic field from the stator 80 and the permanent magnet, and the rotor shafts 63, 64 rotate accordingly. Here, the magnetic field from the stator 80 is generated on the radially inner and outer sides of the stator 80 in the case of the radial gap type. However, in the present embodiment, since the inner and outer rotors 70, 71 are provided to sandwich the stator core 81 in the radial direction, it is possible to improve output torque of the rotary electric machine 61 with respect to the size thereof in comparison with a case where the single rotor is provided for the single stator.

### - Operation/Effects -

First, the inner and outer rollers 90, 91, which are provided in the opening 84, respectively protrude radially inward and outward from each of the openings 84. Thus, even when the predetermined gap G2 between each of the outer rotors 70, 71 and the stator core 81 is narrowed, the inner and outer rotors 70, 71, which are tilted by vibration of the rotary electric machine 61 or the like, respectively come into contact with the inner and outer rollers 90, 91, which are rotatably provided, and do not contact the stator core 81 itself. Thus, it is possible to avoid the occurrence of the abrasion, the breakage, and the rotation lock.

Secondly, only parts of the inner and outer rollers 90, 91 respectively protrude radially inward and outward from the opening 84. In other words, the sizes of the inner and outer rollers 90, 91 can be absorbed by a thickness or the like of the stator core 81. Thus, even when the diameters of the inner and outer rollers 90, 91 are increased, the predetermined gap G2 between each of the inner and outer rotors 70, 71 and the stator core 81 can be narrowed as much as possible. In this way, it is possible to increase the torque density by narrowing the predetermined gap G2 between each of the inner and outer rotors 70, 71 and the stator core 81 while increasing the diameters of the inner and outer rollers 90, 91 to suppress the occurrence of the seizure.

In the rotary electric machine 61 in the present embodiment, the inner rotor 70 is in contact with the inner roller 90. Thus, as indicated by a black arrow in FIG. 11, when the inner rotor 70 rotates about the axial direction with respect to the stator core 81, as indicated by the white arrows in FIG. 11, the inner roller 90 rotates about the axial direction and clockwise in FIG. 11 at a rotational speed (hereinafter referred to as a "second corresponding rotational speed") that corresponds to a rotational speed of the inner rotor 70. The second corresponding rotational speed is (X2/Y2) times a rotational speed of the inner rotor 70 when a radius of the inner rotor 70 is set as X2 and a radius of the inner roller 90 is set as Y2.

Similarly, the outer rotor 71 is in contact with the outer roller 91. Thus, as indicated by the hatched arrows in FIG. 11, when the outer rotor 71 rotates about the axial direction with respect to the stator core 81, as indicated by the dotted arrows in FIG. 11, the outer roller 91 rotates about the axial direction and counterclockwise in FIG. 11 at a rotational speed (hereinafter referred to as a "third corresponding rotational speed") that corresponds to a rotational speed of the outer rotor 71. The third corresponding rotational speed is (X3/Y3) times the rotational speed of the outer rotor 71 when a radius of an inner hollow portion of the outer rotor 71 is set as X3 and a radius of the outer roller 91 is set as Y3.

Here, since Y2 = Y3 and X3 > X2, the third corresponding rotation speed > the second corresponding rotation speed is satisfied. However, as described above, since the inner and outer rollers 90, 91, which are in contact with each other in the opening 84, are in the reverse rotation relationship, the inner and outer rollers 90, 91 rotate at the same rotational speed (a rotational speed that is lower than the third corresponding rotational speed and higher than the second corresponding rotational speed). In this way, in the rotary electric machine 61 according to the present embodiment, it is possible to absorb a rotational speed difference (a slip) between the inner rotor 70 and the outer rotor 71 via the inner and outer rollers 90, 91 that are in contact with and rotate reversely from each other.

In addition, even when the outer rotor 71 separates from the outer roller 91, or the inner rotor 70 separates from the inner roller 90, the inner and outer rollers 90, 91 keep rotating. Thus, even when the inner rotor 70 comes into contact with the inner roller 90 again, or the outer rotor 71 comes into contact with the outer roller 91 again, as in the first embodiment, it is possible to suppress the inhibition of the smooth rotation of the rotary electric machine 61 and the increase in the drag loss.

### (Other Embodiments)

The invention is not limited to the embodiments, and can be implemented in various other forms without departing from the spirit or essential characteristics thereof.

In each of the above embodiments, the invention is applied to the permanent-magnet synchronous rotary electric machine. However, the invention is not limited thereto, and the invention may be applied to a rotary electric machine that does not include the permanent magnet, such as a switched reluctance motor or an induction motor having a cage-like conductor.

In each of the above embodiments, the "rotating body that is rotatably provided in the opening" includes each of the columnar rollers 30, 31, 90, 91. However, the invention is not limited thereto, and the rotating body may be the ball 36.

In each of the above embodiments, the rollers 30, 31, 90, 91 are each made of the magnetic body. However, the invention is not limited thereto, and each of the rollers 30, 31, 90, 91 may be made of a material having low permeability. Even in this case, in the invention, the predetermined gap G or G2 between each of the rotors 10, 11, 70, 71 and respective one of the stator cores 21, 81 can be narrowed as much as possible. Thus, the torque density can be increased.

In the second modified example, in the axial gap type rotary electric machine 1, the electromagnetic fluid 40 is interposed between the roller 30, 31 and the rotor 10, 11, respectively. However, the invention is not limited thereto. In the radial gap type rotary electric machine 61 in the second embodiment, the electromagnetic fluid 40 may be interposed between the inner and outer rollers 90, 91 and the inner and outer rotors 70, 71, respectively.

As described above, the above-described embodiments are merely illustrative in all respects and should not be construed in a limited manner. Furthermore, all modifications and variations that fall within the scope equivalent to the claims are intended to fall within the scope of the invention.

### [Industrial Applicability]

According to the invention, it is possible to achieve the high efficiency of the rotary electric machine. Therefore, the invention is extremely advantageous when being applied to the rotary electric machine in which the plural rotors are arranged to sandwich the stator.

### [Reference Signs List]

1, 1A, 61: rotary electric machine
3, 63, 64: rotor shaft (rotational shaft)
10, 11, 70, 71: rotor
20, 20A, 80: stator
21, 81: stator core
24, 84: opening
30, 30A, 31, 31A, 90, 91: roller (rotating body)
40: electromagnetic fluid
G, G2: predetermined gap

## Claims

1. A rotary electric machine (1, 1A, 61) comprising:
a rotational shaft (3, 63, 64);
a stator (20, 20A, 80) having an annular stator core (21, 81) that is coaxial with the rotational shaft (3, 63, 64); and
paired rotors (10, 11, 70, 71), each of which is connected to the rotational shaft (3, 63, 64) while keeping a predetermined gap (G, G2) from the stator core (21, 81), wherein
the paired rotors (10, 11) are provided to oppose each other in an axial direction in a manner to sandwich the stator core (21) from both sides in the axial direction of the rotational shaft (3), or the paired rotors (70, 71) are provided to oppose each other in a radial direction in a manner to sandwich the stator core (81) from radially inner and outer sides of the rotational shaft (63, 64),
the stator core (21, 81) is provided with an opening (24, 84) that penetrates the stator core (21, 81) in an opposing direction of the paired rotors (10, 11, 70, 71),
in the opening (24, 84), paired rotating bodies (30, 30A, 31, 31A, 90, 91) are rotatably provided to be aligned in the opposing direction, and
the paired rotating bodies (30, 30A, 31, 31A, 90, 91) are in contact with each other in the opening (24, 84), and a portion of each of the rotating bodies (30, 30A, 31, 31A, 90, 91) that protrudes outward in the opposing direction from the opening (24, 84) is in contact with at least one of the paired rotors (10, 11, 70, 71).

2. The rotary electric machine according to claim 1, wherein
the stator core (21) has an annular shape,
the paired rotors (10, 11) are provided to oppose each other in the axial direction in the manner to sandwich the stator core (21) from both of the sides in the axial direction of the rotational shaft (3),
the opening (24) is provided in the stator core (21) in a manner to penetrate the stator core (21) in the axial direction, and
the paired rotating bodies (30, 30A, 31, 31A) are provided in the opening (24) in a manner to be rotatable about the radial direction and be aligned in the axial direction, and a portion of each of the rotating bodies (30, 30A, 31, 31A) that protrudes toward each of outer sides in the axial direction from the opening (24) is in contact with at least one of the paired rotors (10, 11).

3. The rotary electric machine according to claim 2, wherein
each of the paired rotating bodies (30, 30A, 31, 31A) is formed in a columnar shape and provided with a dent (32, 33) in both end portions in the axial direction,
outer and inner support portions (24a, 24b) of the opening (24) are fitted to the dents (32, 33), and the paired rotating bodies (30, 30A, 31, 31A) are thereby attached to the stator core (21).

4. The rotary electric machine according to claim 2, wherein
shaft portions (34, 35) are provided in both of the end portions in the axial direction of paired rotating bodies (30, 30A, 31, 31A), and the shaft portions (34, 35) are inserted in respective concave portions (24c) that are formed in portions defining the radially outer and inner sides of the opening (24).

5. The rotary electric machine according to any one of claims 2 to 4, wherein
a diameter of the paired rotating bodies (30, 30A, 31, 31A) is set such that each the paired rotating bodies (30, 30A, 31, 31A) protrudes axially outward from the opening (24) by a length corresponding to the gap (G).

6. The rotary electric machine according to any one of claims 2 to 5, wherein
the rotary electric machine comprises two stators (20, 20A) arranged between the paired stators (10, 11) and a third rotor (50) interposed between the two stators (20, 20A), wherein each of the stators (20, 20A) comprises the opening (24) and the paired rotating bodies (30, 30A, 31, 31A).

7. The rotary electric machine according to claim 1, wherein
the stator core (81) has a cylindrical shape,
the paired rotors (70, 71) are provided to oppose each other in the radial direction in the manner to sandwich the stator core (81) from the radially inner and outer sides of the rotational shaft (63, 64),
the opening (84) is provided in the stator core (81) in a manner to penetrate the stator core (81) in the radial direction, and
the paired rotating bodies (90, 91) are provided in the opening (84) in a manner to be rotatable about the axial direction and be aligned in the radial direction, and a portion of each of the rotating bodies (90, 91) that protrudes radially inward and outward from the opening (84) is in contact with at least one of the paired rotors (70, 71).

8. The rotary electric machine according to claim 7, wherein
at each side of the opening (84) in the axial direction, concave portions (84a) are formed in a manner to be aligned in the radial direction, and each of the concave portions (84a) is recessed in a conical shape such that a diameter thereof is reduced toward the respective side in the axial direction, and
the paired rotating bodies (90, 91) are formed in a conical shape in which a diameter of an end portion (90a, 91a) on each side in the axial direction is reduced toward the outer side in the axial direction.

9. The rotary electric machine according to claim 7 or 8, wherein
a diameter of each of the paired rotating bodies (90, 91) is set such that each of the paired rotating bodies (90, 91) radially protrudes from the opening 84 by a length corresponding to the gap (G2).

10. The rotary electric machine according to any one of claims 1 to 9, wherein
each of the rotating bodies (30, 30A, 31, 31A, 90, 91) is made of a magnetic body.

11. The rotary electric machine according to claim 10, wherein
an electromagnetic fluid (40) is interposed between the rotating body (30, 30A, 31, 31A, 90, 91) and the rotor(10, 11, 70, 71).

12. An electric vehicle comprising the rotary electric machine according to any one of claims 1 to 11.

13. The electric vehicle according to claim 12, wherein
the rotary electric machine forms an in-wheel motor of the vehicle.
